(19) Europäisches Patentamt

European Patent Office

Office européen des brevets

(11) EP 0 638 526 B1

(12) EUROPÄISCHE PATENTSCHRIFT

(45) Veröffentlichungstag und Bekanntmachung des Hinweises auf die Patenterteilung:
19.08.1998 Patentblatt 1998/34

(51) Int. Cl.$^6$: C03C 3/093, E06B 5/16

(21) Anmeldenummer: 94109227.2

(22) Anmeldetag: 15.06.1994

(54) **Brandschutzsicherheitsglas**

Fire-proof safety glass

Verre de sécurité coupe-feu

(84) Benannte Vertragsstaaten:
CH DE DK ES FR GB LI NL SE

(30) Priorität: 30.07.1993 DE 4325656

(43) Veröffentlichungstag der Anmeldung:
15.02.1995 Patentblatt 1995/07

(73) Patentinhaber:
• Schott Glas
55122 Mainz (DE)
Benannte Vertragsstaaten:
CH DE DK ES FR LI NL SE
• CARL-ZEISS-STIFTUNG
trading as Schott Glas
55122 Mainz (DE)
Benannte Vertragsstaaten:
GB

(72) Erfinder:
• Brix, Peter, Dr.
D-55126 Mainz (DE)
• Kiefer, Werner, Dr.
D-55126 Mainz (DE)
• Leroux, Roland, Dr.
D-55271 Stadecken-Elsheim (DE)

(56) Entgegenhaltungen:
DE-B- 2 941 215        DE-C- 4 230 607
GB-A- 2 067 549       US-A- 3 673 049
US-A- 3 984 252

• CHEMICAL ABSTRACTS, vol. 106, no. 24, 15.Juni 1987 Columbus, Ohio, US; abstract no. 200648m, Seite 277; & SU-A-1 284 959 (STATE SCIENT.-RES. INST. OF GLASS ET AL) 23.Januar 1987
• CHEMICAL ABSTRACTS, vol. 77, no. 20, 13.November 1972 Columbus, Ohio, US; abstract no. 129954h, Seite 221; & PROM. ARM., Bd. 6, 1972 USSR, Seiten 44-45, K.A. KOSTANYAN ET AL
• CHEMICAL ABSTRACTS, vol. 103, no. 2, 15.Juli 1985 Columbus, Ohio, US; abstract no. 10373h, Seite 261; & JP-A-60 042 247 (ASAHI GLASS CO) 6.März 1985
• CHEMICAL ABSTRACTS, vol. 106, no. 20, 18.Mai 1987 Columbus, Ohio, US; abstract no. 161428t, Seite 324; & JP-A-61 281 041 (ASAHI GLASS CO LTD) 11.Dezember 1986

**Beschreibung**

Die Erfindung befaßt sich mit vorspannbaren Glaskörpern, insbesondere in Form einer Glasplatte oder Glasscheibe, die in vorgespanntem Zustand zur Herstellung von thermisch hochbelastbaren Verglasungen, Brandschutzverglasungen mit Sicherheitsglasanforderungen geeignet sind.

Brandschutzverglasungen müssen einschließlich Rahmen und Halterungen entsprechend den Feuerwiderstandsklassen dem Durchtritt von Feuer und Rauch widerstehen. Brandschutzverglasungen werden in Deutschland gemäß den Feuerwiderstandsklassen G30, G60, G90 und G120 klassifiziert. Durch den Einbau in den Rahmen wird die Verglasung durch die Glashalteleiste des Rahmens am Rand abgedeckt. Bei Feuerausbruch entsteht zwischen abgedecktem Scheibenrand und freier Scheibenmitte eine Temperaturdifferenz, die je nach der Tiefe und Art der Randabdeckung zwischen 200 und 350 K betragen kann. Die Feuerwiderstandsdauer bei einem Normbrand nach DIN 4102 hängt in erster Linie ab von der Erweichungstemperatur EW, der Scheibengröße, der Scheibendicke und der Randabdeckung sowie von der Absorption, Reflexion und Wärmeleitfähigkeit des Glases ab. Je breiter die Randabdeckung ist, desto länger wird ein Herausrutschen der Verglasung aus dem Rahmen verhindert. Als Erweichungstemperatur eines Glases wird nach DIN 52312 Teil 3 die Temperatur angegeben, bei der das Glas eine Viskosität von $10^{7,6}$ dPas besitzt. Das ist etwa die Viskosität, bei der Glasbläser Glasartikel verformen.

Bei Gebäudeverglasungen müssen die Verglasungen oft mehrere Anforderungen gleichzeitig erfüllen. Brandschutzverglasungen, die z. B. in Türen eingebaut werden, müssen im täglichen Gebrauch neben dem Brandschutz auch die Sicherheit der Benutzer gewährleisten. So dürfen die Verglasungen bei mechanischer Beanspruchung nicht leicht zu Bruch gehen. Falls es dennoch, z. B. durch Sturz in die Verglasung zu einem Bruch der Scheibe kommt, dürfen bei der Zerstörung der Verglasung nur kleine, stumpfkantige Krümel entstehen (DIN 18361, Abschnitt 2.3.6.3).

In der Praxis werden derzeit drei Typen von monolithischen Gläsern für Brandschutzverglasungen benutzt. Am häufigsten wird das aus Kalk-Natron-Glas bestehende Drahtglas eingesetzt. Bei Brandausbruch zerspringt das Drahtglas bereits nach wenigen Minuten. Die Glasteile werden jedoch durch das punktgeschweißte eingelagerte Drahtgeflecht zusammengehalten. Drahtgläser können in Spezialkonstruktionen mit relativ kleinen Scheibenabmessungen dem Feuer bis zu 60 Minuten widerstehen. Bei mechanischer Belastung zerbrechen Drahtgläser allerdings leichter als normale Glasscheiben gleicher Dicke, da sie durch das Drahtgeflecht im Glasinneren feine Risse aufweisen. Bei ihrer mechanischen Zerstörung können schwere Verletzungen hervorgerufen werden, weil sich Widerhaken bilden. Ein weiterer Nachteil der Drahtgläser ist das wenig ansprechende Erscheinungsbild.

Thermisch hochvorgespannte Kalk-Natron-Gläser (z. B. Floatglas) werden ebenfalls als Brandschutzverglasungen eingesetzt. Aufgrund des hohen Wärmeausdehnungskoeffizienten dieser Gläser besitzen derartige Glasscheiben selbst mit einer hoher Druckvorspannung von 120 N/mm$^2$ - abhängig von der Scheibendicke - nur eine Temperaturunterschiedsfestigkeit (TUF) zwischen kaltem Scheibenrand und heißer Scheibenmitte von etwa 200 bis 220 K. Die Temperaturunterschiedsfestigkeit charakterisiert die Eigenschaft einer Scheibe, der Temperaturdifferenz zwischen heißer Scheibenmitte und kaltem Scheibenrand standzuhalten. Als Kenngröße für die TUF wird die Temperaturdifferenz in Kelvin zwischen der maximalen Temperatur der heißen Scheibenoberfläche im Scheibenmittenbereich und der Temperatur des (überdeckten) kalten Scheibenrandes angegeben, bei deren Überschreiten in der Regel ein Spannungsbruch auftritt. Die Temperaturunterschiedsfestigkeit (TUF) wird nach folgender Standardmeßmethode ermittelt: Platten (ca. 25 x 25 cm2) werden im Plattenmittenbereich (Fläche ca. 254 cm2) definiert aufgeheizt, der Scheibenrand in einer Breite von 2 cm wird auf Raumtemperatur gehalten. Das hierbei eingestellte Flächenverhältnis von kalter zu beheizter Fläche ist so gewählt, daß die nach der Standard-Meßmethode ermittelte maximal zulässige Temperaturdifferenz auf die meisten praxisüblichen Einbausituationen direkt übertragbar ist. Als TUF-Werte wird diejenige Temperaturdifferenz zwischen heißer Scheibenmitte und kaltem Scheibenrand angegeben, bei der 5 oder weniger Prozent der Proben durch Bruch ausfallen.

Damit die bei Kalk-Natron-Gläsern für eine Brandschutzverglasung sehr geringe TUF im Brandfalle nicht überschritten wird, ist nur eine schmale Halteleiste, entsprechend einem geringen Glaseinstand von 10 mm oder darunter erlaubt, was zu einer schnelleren Erwärmung des Scheibenrandes führt. Auch die Erweichungstemperatur von Kalk-Natron-Glas (Floatglas) liegt mit etwa 780 °C relativ niedrig, so daß Brandschutzverglasungen aus thermisch vorgespanntem Kalk-Natron-Glas nur in speziellen Rahmensystemen und in bestimmten Scheibengrößen und Scheibendikken dem Feuer 30 Minuten widerstehen können und damit lediglich die unterste Feuerwiderstandsklasse von G30 erfüllen. Die Forderungen bezüglich Sicherheitsglas (Krümelbruch) werden von diesen Gläsern jedoch erfüllt.

Das dritte gebräuchliche Brandschutzglas ist ein thermisch vorgespanntes Borosilikatglas mit niedrigem Wärmeausdehnungskoeffizienten $\alpha_{20/300}$ von 3,3 x 10$^{-6}$ K$^{-1}$. Mit herkömmlichen Luftvorspannanlagen, mit denen sich eine Wärmeübergangszahl von etwa 300 Watt pro (m$^2$ x K) erreichen läßt, kann in diesem Glas nur eine maximale Druckvorspannung von etwa 50 - 60 N/mm$^2$ erreicht werden. Trotz dieser geringen Druckvorspannung besitzen die Gläser jedoch aufgrund der niedrigen spezifischen Wärmespannung $\varphi$ von 0,25 eine Temperaturunterschiedsfestigkeit von über 400 K. Die spezifische Wärmespannung $\varphi$ errechnet sich gemäß der Gleichung $\varphi = \alpha \times E / (1 - \mu)$. Dabei bedeutet E der Elastizitätsmodul N/mm$^2$ und $\mu$ die Poisson Konstante. Diese Brandschutzverglasungen widerstehen dem Aufheizprozeß bei Brandbeginn auch mit einer Randabdeckung von 20 - 30 mm. Aufgrund der höheren Erweichungstemperatur von 820 °C widerstehen diese Brandschutzverglasungen, je nach Konstruktion, dem Feuer über 90 - 120 Minuten. Die geringe Vorspannung von 50 - 60 N/mm$^2$ reicht zwar zur Kompensation der thermischen Spannungen in der Aufheizphase eines Brandes aus, jedoch nicht, um die Verglasung bei einer mechanischen Zerstörung in feine Krümel gemäß DIN 1249 Teil 12 zerfallen zu lassen. Diese Verglasungen können somit nicht für alle Anwendungsfälle Verwendung finden.

Es ist zwar bekannt, daß durch Abschrecken der Gläser durch Eintauchen in ölüberschichtetes Wasser ein um den Faktor etwa 10 höherer Wärmeübergang gegenüber dem Abschrecken mit Luft erreicht werden kann. Dadurch ist es grundsätzlich möglich, eine Druckvorspannung von etwa 100 N/mm$^2$ in einer 5 mm dicken Scheibe aus Borosilikatglas mit einer Wärmeausdehnung von nur 3,3 x 10$^{-6}$ K$^{-1}$ zu erzeugen. Die Temperaturunterschiedsfestigkeit wird dadurch auf etwa 600 K erhöht und die Verglasung zerfällt bei ihrer mechanischen Zerstörung in feine Krümel.

Diese erhöhte Temperaturunterschiedsfestigkeit würde zwar eine breitere Randabdeckung erlauben, aber eine Randabdeckung von über 30 mm bringt bezüglich der Feuerwiderstandsdauer keine nennenswerten Vorteile mehr und kommt daher in der Praxis auch nicht zur Anwendung. Die Vorspannung der Gläser durch Abschrecken in ölüberschichtetem Wasser hat gegenüber dem Abschrecken mit Luft erhebliche Nachteile, wodurch der Einsatz zur Herstellung von Brandsicherheitsgläsern bisher weitgehend verhindert worden ist. Zum einen ist das Verfahren technisch aufwendiger und erheblich kostenintensiver als das Abschrecken mit Luft in herkömmlichen Luftvorspannanlagen und zum anderen müssen für das Abschrecken in ölüberschichtetem Wasser die Scheiben vertikal an Zangen hängend aufgeheizt und abgeschreckt werden. Die Zangeneindrücke stellen jedoch bei Verglasungen immer eine besondere ästhetische Schwachstelle dar.

Die Aufgabe der Erfindung ist es, Glasscheiben zu finden, die sich in einer herkömmlichen Luftvorspannanlage mit einem Wärmeübergangskoeffizienten von etwa 200 bis 550 Watt pro (m$^2$ x K) bei 1 bis 19 kPas Anblasdruck so hoch vorspannen lassen, daß sie bei der mechanischen Zerstörung in feine Krümel gemäß DIN 1249 zerfallen, die andererseits im Brandfall jedoch als Brandschutzverglasung auch in großen Abmessungen in praxisüblichen Rahmensystemen dem Feuer je nach Ausführung 30 - 120 Minuten sicher widerstehen und die ein einwandfreies ästhetisches Bild (kein Draht, keine Zangeneindrücke) besitzen.

Diese Aufgabe wird durch die in Patentanspruch 1 beschriebene Verwendung gelöst.

Der Wärmeausdehnungskoeffizient $\alpha_{20/300}$ der Gläser soll zwischen 3 und 6 x 10$^{-6}$ K$^{-1}$ liegen. Gläser mit derartig niedrigen Wärmeausdehnungskoeffizienten werden auch als Hartglas bezeichnet. Die spezifische Wärmespannung $\varphi$ soll zwischen 0,3 und 0,5 N/(mm$^2$ K) liegen. Die spezifische Wärmespannung $\varphi$ errechnet sich gemäß der Gleichung $\varphi = E \times \alpha / (1 - \mu)$, wobei $\alpha$ der Wärmeausdehnungskoeffizient, E der Elastizitätsmbdul und $\mu$ die Poissionzahl ist. Elastizitätsmbdul E wird mit 65 GPa und die Poissionzahl $\mu$ mit 0,2 als konstanter Wert angenommen, da sie sich kaum mit der Zusammensetzung der Gläser ändern. Brandschutzverglasungen sollen eine Temperaturunterschiedsfestigkeit von mindestens 330, bevorzugt 350, insbesondere mindestens 400 K aufweisen, um die raschere Aufheizung der Scheibenmitte (bei kaltem Scheibenrand) bei Ausbruch eines Brandes sicher zu überstehen bei einer ausreichend breiten Randabdeckung. Als Brandschutzverglasungen werden im allgemeinen Scheiben mit einer Dicke zwischen 5 und 7 mm eingesetzt, wobei aus Kostengründen im allgemeinen Scheiben von 5 mm Dicke bevorzugt werden. Damit thermisch vorgespannte Scheiben bei ihrer mechanischen Zerstörung in feine Krümel zerfallen und damit die Sicherheitseigenschaften gemäß DIN 1249 (Krümelbruch) erfüllen, müssen sie in der Regel eine Druckvorspannung von mindestens 80 N/mm$^2$ aufweisen. Ist jedoch die Druckvorspannung zu hoch, d. h. deutlich über 120 N/mm$^2$, dann besteht die Gefahr, daß es durch Fehler im Glasinneren (z. B. Kristalle oder mikrokleine Partikel) zur direkten oder verzögerten Selbstzerstörung der Scheibe kommen kann.

Die Temperaturunterschiedsfestigkeit einer Scheibe ist abhängig von dem Quotienten aus der Gesamtfestigkeit der Scheibe und der spezifischen Wärmespannung $\varphi$. Die theoretische Gesamtfestigkeit der Scheibe setzt sich ihrerseits zusammen aus der Grundfestigkeit des Glases ($\sigma_G$) und der Druckvorspannung ($\sigma_v$). Unter der Forderung einer maximalen Druckvorspannung von 120 N/mm$^2$ und einer minimalen Temperaturunterschiedsfestigkeit von 350 K ergibt sich eine obere Grenze für die spezifische Wärmespannung von etwa 0,5 N pro (mm$^2$ x K). Für eine minimale Druckvorspannung von etwa 80 N/mm$^2$ und einer Temperaturunterschiedsfestigkeit von 400 K ist ein Wärmespannungsfaktor von 0,3 N pro (mm$^2$ x K) erlaubt.

Es ist bekannt, daß bei einer vorgegebenen Vorspannanlage (konstanter Wärmeübergang), die in der Glasscheibe erzeugte Druckvorspannung $\sigma_v$ umso größer ist, je höher die Wärmeausdehnung $\alpha$ bzw. der Wärmespannungsfaktor $\varphi$ ist. Während jedoch die spezifische Wärmespannung $\varphi$ für eine hohe Temperaturunterschiedsfestigkeit möglichst niedrig sein soll, muß er für die Erzeugung einer ausreichenden Druckvorspannung möglichst groß sein. Es wird daher beschrieben (DE 30 01 944), daß Hartgläser ($\alpha \leq 6 \times 10^{-6}$ K$^{-1}$) mit einer spezifischen Wärmespannung < 0,5 N pro (mm$^2$ x K) durch Abschrecken mit Luft eine für die Verwendung als Sicherheitsglas ausreichende Vorspannung nicht erzeugt werden kann.

Überraschenderweise wurde gefunden, daß derartige Gläser auch mit einer herkömmlichen Luftvorspannanlage so hoch vorgespannt werden können, daß sie eine Temperaturunterschiedsfestigkeit von wenigstens 350 K und gleichzeitig die Eigenschaft eines Sicherheitsglases haben, wenn ihr Produkt aus Wärmespannungskoeffizient $\varphi$ x (Tg - 20°C) zwischen 180 und 360 N/mm$^2$ und ihre Transformationstemperatur Tg zwischen 535 und 850°C liegen.

Es hat sich gezeigt, daß durch Erhöhung der Transformationstemperatur des Glases sowohl die Druckvorspannung, als auch in Folge dieser Druckvorspannung die Temperaturunterschiedsfestigkeit erhöht werden.

Obwohl prinzipiell für die Transformationstemperatur Tg nach oben keine Grenze gesetzt ist, sollte ein Tg von 850 °C, vorzugsweise 750 °C nicht überschritten werden, da sonst die Gefahr besteht, daß die Verglasung im Brandfall durch den sich verziehenden Stahlrahmen zerstört wird, da das Glas noch nicht weich genug ist. Darüber hinaus steigen mit steigendem Tg natürlich auch die Investitions- und Betriebskosten für den Aufheizofen, da die Scheibe vor dem Abschrecken über Tg erhitzt werden muß. Sinkt die Transformationstemperatur Tg unter 535 °C, so kann die gewünschte Vorspannung im allgemeinen nicht mehr erreicht werden.

Weiterhin muß zur Erreichung der beiden Ziele Feuerwiderstandsdauer und Vorspannung (Krümelbruch) bei den Glasscheiben das Produkt aus spzifischer Wärmespannung $\varphi$ x (Tg - 20°C) zwischen 180 und 360 N/mm$^2$ liegen. Überschreitet man diesen Bereich, so sinkt die Temperaturunterschiedsfestigkeit. Unterschreitet man den Wert von 180 N/mm$^2$, so lassen sich mit diesen Gläsern auf herkömmlichen Luftvorspannanlagen keine Sicherheitsgläser mehr herstellen.

Die Vorspannung soll in einer herkömmlichen Luftvorspannanlage erfolgen können, d. h. Luftvorspannanlagen, mit denen auch herkömmlicherweise Kalk-Natron-Gläser bis zu einer Dicke von minimal 2,8 mm vorgespannt werden können. In diesen Anlagen findet das Vorspannen durch Anblasen mit Luft unter einem Anblasdruck von 1 - 10 kPas statt. Dabei wird ein Wärmeübergang von etwa 200 - 550 W / (m$^2$ x K) erreicht. Derzeit übliche Anlagen arbeiten im Bereich von Wärmeübergängen von etwa 300 W / (m$^2$ x K). Unterhalb eines Wärmeübergangs von 200 W/(m$^2$ x K) läßt sich im allgemeinen keine ausreichende Vorspannung mehr erzielen. Die Verwendung einer Vorspannanlage mit Wärmeübergangszahlen von mehr als 550 W/(m$^2$ x K) ist durchaus möglich, jedoch ist eine Steigerung der Wärmeübergangszahlen bei Luftvorspannanlagen mit einem erhöhten technischem Aufwand verbunden. Für Bauverglasungen sind horizontale Vorspannanlagen bevorzugt, da hierbei störende Zangeneindrücke im vorgespannten Glas vermieden werden können.

Brandversuche haben gezeigt, daß die Erweichungstemperatur der Gläser über 830 °C, insbesondere über 860 °C liegen soll. Eine höhere Erweichungstemperatur hat den Vorteil, daß entweder größere Verglasungen bei gleicher Feuerwiderstandsklasse erreicht werden können oder daß gleich große Verglasungen die nächsthöhere Feuerwiderstandsklasse erreichen. Es können bei höheren Erweichungstemperaturen unter Umständen auch dünnere, z. B. 5 mm dicke Scheiben anstelle von 7 mm dicken Scheiben eingesetzt werden. Unter Erweichungstemperatur wird die Temperatur verstanden, bei der das Glas eine Viskosität von 10$^{7,6}$ dPas besitzt.

Da an die Brandschutzverglasungen hohe Qualitätsanforderungen hinsichtlich der Freiheit von Blasen und Schlieren gestellt werden, soll die Verarbeitungstemperatur VA, das ist die Temperatur, bei der die Viskosität des Glases 10$^4$ dPas besitzt (Verarbeitungspunkt) nicht über 1300 °C, vorzugsweise nicht über 1280 °C liegen. Gläser mit solchen Verarbeitungspunkten können noch auf Floatglasanlagen produziert werden.

Schließlich soll auch die Temperatur des oberen Kühlpunktes, d. h. die Temperatur bei der Viskosität des Glases von 10$^{13}$ dPas über 560 °C liegen, um Abdrücke der Transportwalzen der Vorspannanlage auf dem Glas zu vermeiden. Bevorzugt wird ein Bereich für den oberen Kühlpunkt von 600 bis 620 °C.

Die folgenden Gleichungen zeigen den Zusammenhang zwischen Wärmeübergangszahl $\alpha$-, Vorspannung $\sigma_v$, Grundfestigkeit des Glases $\sigma_G$, der Temperaturunterschiedsfestigkeit TUF, der Scheibendicke d und der Glastransformationstemperatur Tg.

$$\varphi = \frac{\sigma_v + \sigma_G}{TUF}$$

$\alpha'$ = Wärmeübergangszahl
$\lambda$ = Wärmeleitung

$$B = \frac{\alpha' \text{ x } d/2}{\lambda \text{ t } \alpha' \text{ x } d/2}$$

$$\sigma_v/B = \varphi \text{ x } (Tg - T\infty)$$

Zur Erleichterung der Rechnungen können einige Vereinfachungen vorgenommen werden: Für alle Gläser kann eine Grundfestigkeit $\sigma_G$ von 50 N/mm$^2$ und eine Wärmeleitfähigkeit von 1,45 W/(m x K) als Konstante angenommen werden, da diese Werte kaum von der Glaszusammensetzung abhängig sind. Für T$\infty$ kann die Raumtemperatur (20 °C) eingesetzt werden. In der Tabelle 1 sind einige Beispiele für die Glastransformationstemperatur bei unterschiedlichen Vorgaben für die Vorspannung $\sigma_v$ die Temperaturunterschiedsfestigkeit TUF und die Scheibendicke d zusammengestellt.

Tabelle 1

| Nr. | $\sigma_v$ | TUF | $\varphi$ | d | B | $\sigma_v/B$ | $\sigma_v/(B \cdot v)$ | Tg |
|-----|-----|-----|-------|---|------|-----|-----|-----|
| 1 | 80 | 350 | 0,37 | 7 | 0,42 | 191 | 515 | 535 |
| 2 | 80 | 350 | 0,37 | 5 | 0,34 | 235 | 635 | 655 |
| 3 | 120 | 350 | 0,49 | 7 | 0,42 | 285 | 581 | 601 |
| 4 | 120 | 350 | 0,49 | 5 | 0,34 | 333 | 720 | 740 |
| 5 | 80 | 400 | 0,325 | 7 | 0,42 | 191 | 588 | 608 |
| 6 | 80 | 400 | 0,325 | 5 | 0,34 | 235 | 723 | 743 |
| 7 | 120 | 400 | 0,425 | 7 | 0,42 | 285 | 670 | 690 |
| 8 | 120 | 400 | 0,425 | 5 | 0,34 | 353 | 830 | 850 |

Borosilikatgläser mit Glastransformationstemperaturen bis zu 600 °C eignen sich für Vorspannungen $\sigma_v$ bis 120 N/mm$^2$ bei Scheibendicken von etwa 7 mm, siehe dazu Tabelle 1 Nr. 3.

Borosilikatgläser, die die erforderlichen Eigenschaften besitzen, sind in folgendem Zusammensetzungsbereich (in Gew.-% auf Oxidbasis) zu finden: $SiO_2$ 73-78; $B_2O_3$ 9-12; $Al_2O_3$ 1,5-4; $Na_2O$ 1-5; $K_2O$ 1-5; $Li_2O$ 0-4); $\Sigma$ $Na_2O + K_2O + Li_2O$ 5-7; MgO 0-3; CaO 1-3; BaO + SrO 0-2; ZnO 1-2; $ZrO_2$ 0,5-3; $\Sigma$ MgO + CaO + SrO + BaO + ZnO + $ZrO_2$ 6-10 sowie ggf. noch Läutermittel wie $Sb_2O_3$, $As_2O_3$, $CeO_2$ oder NaCl in den üblichen Mengen. Sowohl die Erweichungstemperaturen bis 860 °C als auch die Verarbeitungstemperaturen unterhalb 1300 °C liegen bei diesen Gläsern im geforderten Bereich.

Für noch höhere Vorspannungen oder geringere Scheibendicken können nur noch Alumosilikatgläser mit einer Glastransformationstemperatur Tg > 650 °C eingesetzt werden. Alumosilikatgläser, die die erforderlichen Eigenschaften besitzen, befinden sich in dem Zusammensetzungsbereich (in Gew.-% auf Oxidbasis) von: $SiO_2$ 57-64; $B_2O_3$ 0-6; $Al_2O_3$ 12-17; MgO 0-6; CaO 5-19; SrO + BaO 0-6,5; ZnO 0-7; $ZrO_2$ 1-5,5; $CeO_2$ 0-8; $TiO_2$ 0-4,5; $\Sigma$ MgO + CaO + SrO + BaO + ZnO + $ZrO_2$ + $CeO_2$ + $TiO_2$ 16-26; sowie ggf. noch übliche Läutermittel wie NaCl, $Sb_2O_3$, $As_2O_3$ in den üblichen Mengen.

Mit zunehmender Branddauer und damit zunehmender Scheibentemperatur steigt die Gesamttransmission des Glases an. Dies hat zur Folge, daß die Wärmestrahlung auf der dem Brand abgewandten Seite der Scheibe mit zunehmender Branddauer ansteigt. Dadurch sind die Einsatzgebiete dieser Gläser eingeschränkt, insbesondere dann, wenn sich vor der Brandschutzverglasung auf der dem Feuer abgekehrten Seite leicht entzündliche Materialien befinden oder Fluchtwege für Menschen oder Tiere gesichert werden müssen.

Um diese Wärmestrahlung abzumindern, kommen Mehrfachverglasungen zum Einsatz, bei denen wärmeverbrauchende bzw. intumeszierende Zwischenschichten angebracht sind, die bei großer Hitze aufschäumen oder durch Verdampfen oder Eintrübung die Scheibentemperatur auf der dem Feuer abgekehrten Seite absenken. Weiterhin ist es bekannt, Scheiben auf der dem Feuer zugekehrten oder auf beiden Seiten temperaturbeständig wärmereflektierend zu beschichten, wodurch ebenfalls eine Reduzierung der von der Scheibe ausgehenden Wärmestrahlung erfolgt.

Alle diese Schichten bewirken zwar eine hohe Wärmestrahlungsreflexion von z. T. über 75 % und zeigen nur einen geringen Emissionsgrad (unter 25 %) im Brandfall, jedoch verteuern diese Schichten das Produkt erheblich und sind darüber hinaus aus optischen Gründen nicht uneingeschränkt in Bauverglasungen einsetzbar.

Überraschenderweise tritt bei den Borosilikatgläsern während des langsamen Temperaturanstiegs der Scheiben im Brandfall, insbesondere bei hohen Temperaturen, eine Teilentmischung unter Entstehung einer zweiten, hochborsäurehaltigen Glasphase ein. Diese Teilentmischung tritt auf der Feuerseite des Glases auf, also auf der Brandseite und bewirkt dort eine Trübung des Glases, die den Durchgang der Wärmestrahlung signifikant erniedrigt. Die Folge davon ist eine Reduktion der Oberflächentemperatur und der Wärmestrahlung vor der Verglasung. Darüber hinaus kann sich das Glas - abhängig von der Zusammensetzung - durch diese Entmischung aussteifen. Kommen anstelle der Borosilikatgläser Alumosilikatgläser zum Einsatz, so werden ähnliche Effekte beobachtet. Es kommt jedoch bei Alumosilikatgläsern nicht zu einer Entmischung, sondern zu einer Oberflächenkristallisation, die jedoch dieselben Effekte hinsichtlich Minderung des Strahlendurchgangs und Aussteifung der Scheibe bei höheren Temperaturen besitzt.

Obwohl die Beschreibung der Erfindung im wesentlichen am Beispiel eines Brandschutzsicherheitsglases vorgenommen wurde, ist das erfindungsgemäß verwendete Glas auch besonders geeignet für die Herstellung von vorgespannten Glaskörpern, die sowohl Sicherheitsglasanforderungen erfüllen als auch eine hohe thermische Widerstandsfähigkeit besitzen müssen, z. B. für Lichtdome, Bullaugen, Glaskuppeln, Glastüren, Ofentüren (auch gebogen), Rauchschutztüren, Lampenschutzgläser, Backofenfenster und dergleichen.

Beispiele:

Soweit in den folgenden Beispielen Druckvorspannungen angegeben sind, wurden diese sowohl zerstörungsfrei durch spannungsoptische Messung der Doppelbrechung (Angaben in $N/mm^2$) als auch nach Zerstörung der Scheibe durch Auszählen der Glaskrümel (n = mittlere Anzahl pro Zählfeld 50 mm x 50 mm) und der mittleren Krümelfläche a (in $mm^2$) quantifiziert. Erfüllt das Erscheinungsbild der Krümel die Anforderungen gemäß DIN 1249 an Sicherheitsglas, so ist das mit "erfüllt" angegeben. Ferner wurde noch die mechanische Stabilität der vorgespannten Scheiben gegenüber Pendelschlag z. B. nach BS 6206 oder DIN 52337 ermittelt und klassifiziert. Die Standzeiten im Brandversuch wurden gemäß DIN 4102 anhand der Einheitstemperaturkurve (ETK) ermittelt.

Beispiel 1:

Eine Borosilikat-Flachglasscheibe der Dicke 5 mm in dem Format 1200 mm x 2000 mm wurde mit einem Randeinstand von 15 mm in einen Stahlrahmen eingebaut und dem Brandversuch nach DIN 4102 unterzogen. Das Glas hatte die Zusammensetzung (in Gew.-% auf Oxidbasis) von: 74,0 $SiO_2$; 10,1 $B_2O_3$; 2,8 $Al_2O_3$; 3,5 $Na_2O$; 3,6 $K_2O$; 2,7 CaO; 1,4 ZnO; 1,7 $ZrO_2$ und 0,2 $TiO_2$.

Dieses Glas hat folgende Eigenschaften:

$\alpha_{20/300}$ = 4,5 x $10^{-6}$ $K^{-1}$; Tg = 585 °C; oberer Kühlpunkt = 601 °C; Erweichungspunkt = 860 °C; Verarbeitungspunkt = 1250 °C; $\varphi$ = 0,45 $N/(mm^2$ x K); $\varphi$ x (Tg - 20°C) = 254 $N/mm^2$; mittlere Vorspannung = 98 $N/mm^2$ (n > 150, a < 18); Krümelbild nach DIN 1249 = erfüllt; Pendelschlag nach BS 6206 = class A.

Die Standzeit (DIN 4102 Teil 13) im Brandversuch betrug > 60 Minuten.

Beispiel 2:

Eine Borosilikatflachglasscheibe der Dicke 6 mm als Gegenscheibe einer Brandschutzisolierverglasung mit folgendem Aufbau: Floatglas (Dicke 4 mm) / Scheibenzwischenraum (12 mm) / Borosilikatsicherheitsglas (Dicke 6 mm) in einem Scheibenformat von 1400 mm x 2400 mm wurde in einen Stahlrahmen mit einem Randeinstand von 20 mm eingebaut und einem Brandversuch unterzogen. Das Glas hatte folgende Hauptbestandteile (in Gew.-% auf Oxidbasis):

| | |
|---|---|
| 73,70 % | $SiO_2$ |
| 11,10 % | $B_2O_3$ |
| 2,90 % | $Al_2O_3$ |
| 2,20 % | $Na_2O$ |
| 3,80 % | $K_2O$ |
| 2,70 % | CaO |
| 1,60 % | ZnO |
| 2,00 % | $ZrO_2$ |
| 0,10 % | $TiO_2$ |

Die physikalischen Eigenschaften der Borosilikatflachglasscheibe waren folgende:

| | |
|---|---|
| $\alpha_{20/300}$ | 4,2 x $10^{-6}$ $K^{-1}$ |
| Tg | 590 °C |
| OKP | 610 °C |
| EW | 865 °C |
| VA | 1260 °C |
| $\varphi$ | 0,40 $N/(mm^2$ x K) |
| $\varphi$ x (Tg -20 °C) | 228 $N/mm^2$ |
| mittl. Vorspannung | 92 $N/mm^2$ (n > 130, a < 15) |
| Krümelbild nach DIN 1249 | erfüllt |
| Pendelschlag nach BS 6206 | class A |

Die Standzeit dieser Verglasung im Brandversuch nach DIN 4102 Teil 13 war größer als 90 Minuten.

EP 0 638 526 B1

Beispiel 3:

6 Scheiben eines Alumosilikatflachglases der Dicke 6 mm in dem Format 50 x 50 cm$^2$ wurden in einen 6-Felder-Stahlrahmen mit einem Randeinstand von 20 mm eingebaut.

Das Glas hatte folgende mittlere Zusammensetzung (in Gew.-% auf Oxidbasis):

| | |
|---|---|
| 59,50 % | $SiO_2$ |
| 5,50 % | $B_2O_3$ |
| 15,00 % | $Al_2O_3$ |
| 0,50 % | $Li_2O$ |
| 0,70 % | $Na_2O$ |
| 4,50 % | $MgO$ |
| 6,00 % | $CaO$ |
| 0,50 % | $BaO$ |
| 6,20 % | $ZnO$ |
| 1,20 % | $ZrO_2$ |
| 0,10 % | $Sb_2O_3$ |

Die physikalischen Daten waren die folgenden:

| | |
|---|---|
| $\alpha_{20/300}$ | $4,1 \times 10^{-6} \, K^{-1}$ |
| Tg | 655 °C |
| OKP | 653 °C |
| EW | 868 °C |
| VA | 1190 °C |
| $\varphi$ | $0,46 \, N/(mm^2 \times K)$ |
| $\varphi \times$ (Tg -20 °C) | $292 \, N/mm^2$ |
| mittl. Vorspannung | $92 \, N/mm^2$ (n > 120, a < 20) |
| Krümelbild nach DIN 1249 | erfüllt |
| Pendelschlag nach BS 6206 | nicht getestet |

Diese Scheibe konnte dem Feuer im Brandversuch gemäß DIN 4102 Teil 13 länger als 120 Minuten widerstehen.

Beispiele 4 - 18:

Die Zusammensetzung von weiteren Borosilikatgläsern mit ihren physikalischen Eigenschaften sind in den Tabellen 2 und 3 zusammengefaßt.

Tabelle 2

| Nr. | $SiO_2$ | $B_2O_3$ | $Al_2O_3$ | $Na_2O$ | $K_2O$ | $MgO$ | $CaO$ | $BaO$ | $ZnO$ | $ZrO_2$ |
|---|---|---|---|---|---|---|---|---|---|---|
| 4 | 73,50 | 9,00 | 1,50 | 5,00 | 1,00 | 3,00 | 1,00 | 1,00 | 2,00 | 3,00 |
| 5 | 74,70 | 11,00 | 2,00 | 2,40 | 3,00 | | 2,40 | | 2,00 | 2,50 |
| 6 | 77,60 | 9,00 | 1,50 | 2,50 | 2,95 | | 2,35 | | 1,60 | 2,50 |
| 7 | 75,45 | 10,00 | 2,50 | 2,00 | 3,60 | | 2,35 | | 1,60 | 2,50 |
| 8 | 75,90 | 10,00 | 2,00 | 2,20 | 3,45 | | 2,35 | | 1,60 | 2,50 |
| 9 | 75,05 | 10,00 | 2,50 | 2,00 | 4,00 | | 2,35 | | 1,60 | 2,50 |
| 10 | 74,80 | 10,00 | 2,50 | 2,00 | 4,25 | | 2,35 | | 1,60 | 2,50 |
| 11 | 74,25 | 11,00 | 2,50 | 2,30 | 3,50 | | 2,35 | | 1,60 | 2,50 |
| 12 | 73,65 | 10,00 | 3,50 | 3,05 | 2,70 | | 3,00 | | 1,60 | 2,50 |
| 13 | 74,50 | 10,00 | 2,50 | 2,00 | 4,55 | | 2,35 | | 1,60 | 2,50 |
| 14 | 73,50 | 11,05 | 2,90 | 2,00 | 4,25 | | 2,70 | | 1,60 | 2,00 |

7

Tabelle 2 (fortgesetzt)

| Nr. | SiO₂ | B₂O₃ | Al₂O₃ | Na₂O | K₂O | MgO | CaO | BaO | ZnO | ZrO₂ |
|-----|------|------|-------|------|------|-----|------|-----|------|------|
| 15 | 73,60 | 11,05 | 2,90 | 2,00 | 4,15 | | 2,70 | | 1,60 | 2,00 |
| 16 | 73,60 | 11,10 | 2,90 | 2,20 | 3,90 | | 2,70 | | 1,60 | 2,00 |
| 17 | 73,70 | 11,10 | 2,90 | 2,20 | 3,80 | | 2,70 | | 1,60 | 2,00 |
| 18 | 74,20 | 11,10 | 2,90 | 1,70 | 3,80 | | 2,70 | | 1,60 | 2,00 |

Tabelle 3

| Nr. | $\alpha_{20/300}$ x10⁻⁶ K⁻¹ | Tg °C | Temperatur bei 10¹³ dPas[°C] | Temperatur bei 10⁷·⁶ dPas[°C] | Temperatur bei 10⁴ dPas [°C] | φ [N/(mm²xK)] | φ x (Tg - 20°C) [N/mm²] |
|-----|------|-------|------|------|------|------|------|
| 4 | 4,50 | 579 | 579 | 831 | 1210 | 0,37 | 204 |
| 5 | 4,03 | 575 | 605 | 847 | 1240 | 0,33 | 182 |
| 6 | 3,95 | 589 | 617 | 859 | 1271 | 0,32 | 183 |
| 7 | 3,98 | 589 | 610 | 865 | 1283 | 0,33 | 184 |
| 8 | 4,07 | 585 | 611 | 848 | 1257 | 0,33 | 187 |
| 9 | 4,19 | 589 | 609 | 870 | 1260 | 0,34 | 194 |
| 10 | 4,23 | 589 | 610 | 864 | 1255 | 0,34 | 196 |
| 11 | 4,14 | 580 | 603 | 870 | 1241 | 0,34 | 188 |
| 12 | 4,40 | 597 | 609 | 848 | 1254 | 0,36 | 206 |
| 13 | 4,35 | 591 | 606 | 847 | 1252 | 0,35 | 202 |
| 14 | 4,32 | 587 | 601 | 837 | 1234 | 0,35 | 195 |
| 15 | 4,36 | 585 | 603 | 842 | 1232 | 0,35 | 200 |
| 16 | 4,37 | 589 | 602 | 834 | 1225 | 0,36 | 202 |
| 17 | 4,31 | 588 | 604 | 838 | 1244 | 0,35 | 199 |
| 18 | 4,25 | 599 | 606 | 858 | 1256 | 0,35 | 200 |

**Patentansprüche**

1. Verwendung eines Glaskörpers mit

   - einem Wärmeausdehnungskoeffizienten $\alpha_{20/300}$ zwischen 3 und 6 x 10⁻⁶ K⁻¹,
   - einer spezifischen Wärmespannung φ zwischen 0,3 und 0,5 N/(mm² x K),
   - einer Glastransformationstemperatur Tg zwischen 535 und 850 °C,
   - einem Produkt aus spezifischer Wärmespannung φ mal (Tg-20 °C) zwischen 180 und 360 N/mm²
   - einer Temperatur bei der Viskosität 10¹³ dPas (oberer Kühlpunkt) über 560 °C,
   - einer Temperatur bei der Viskosität 10⁷·⁶ dPas (Erweichungspunkt) über 830 °C,
   - und einer Temperatur bei der Viskosität 10⁴ dPas (Verarbeitungspunkt) unter 1300 °C

   zur Erzeugung eines als Brandschutzsicherheitsglas geeigneten vorgespannten Glaskörpers, der in vorgespanntem Zustand eine hohe Belastbarkeit gegen thermisch oder mechanisch induzierte Spannungen sowie Sicherheitsglaseigenschaften gemäß DIN 1249 oder BS 6206 (Krümelbruch) besitzt, insbesondere einer Glasscheibe für Brandschutzverglasungen, auf einer herkömmlichen Luftvorspannanlage mit Wärmeübergangskoeffizienten zwischen 200 und 550 Wm⁻²K⁻¹ bei 1 bis 19 kPas Anblasdruck.

2. Verwendung eines Glaskörpers nach Anspruch 1 mit einer Zusammensetzung (in Gew.-% auf Oxidbasis) von:

| SiO$_2$ | 73 | - | 78 |
|---|---|---|---|
| B$_2$O$_3$ | 9 | - | 12 |
| Al$_2$O$_3$ | 1,5 | - | 4 |
| Li$_2$O | 0 | - | 4 |
| Na$_2$O | 1 | - | 5 |
| K$_2$O | 1 | - | 5 |
| MgO | 0 | - | 3 |
| CaO | 1 | - | 3 |
| SrO + BaO | 0 | - | 2 |
| ZnO | 1 | - | 2 |
| ZrO$_2$ | 0,5 | - | 3 |
| Σ Alkalioxide | 6 | - | 7 |
| Σ MgO+CaO+SrO+BaO+ZnO+ZrO$_2$ | 6 | - | 10 |

und ggf. als Läutermittel NaCl, Sb$_2$O$_3$, As$_2$O$_3$, und CeO$_2$ in den üblichen Mengen.

3. Verwendung eines Glaskörpers nach Anspruch 1 mit einer Zusammensetzung (in Gew.-% auf Oxidbasis) von:

| SiO$_2$ | 57 | - | 64 |
|---|---|---|---|
| B$_2$O$_3$ | 0 | - | 6 |
| Al$_2$O$_3$ | 12 | - | 17 |
| MgO | 0 | - | 6 |
| CaO | 5 | - | 19 |
| SrO + BaO | 0 | - | 6,5 |
| ZnO | 0 | - | 7 |
| ZrO$_2$ | 1 | - | 5,5 |
| CeO$_2$ | 0 | - | 8 |
| TiO$_2$ | 0 | - | 4,5 |
| Σ MgO+CaO+SrO+BaO+ZnO+ZrO$_2$+CeO$_2$+TiO$_2$ | 16 | - | 26 |

und ggf. als Läutermittel NaCl, Sb2O3 und As$_2$O$_3$ in den üblichen Mengen.

4. Verwendung eines Glaskörpers nach wenigstens einem der Ansprüche 1 bis 3, zur Erzeugung eines vorgespannten Glaskörpers mit einer Druckvorspannung von 80 - 120 N/mm$^2$.

5. Verwendung eines Glaskörpers nach wenigstens einem der Ansprüche 1 bis 4 zur Erzeugung einer Glasscheibe mit einer Druckvorspannung von 80 - 120 N/mm$^2$ und einer Feuerwiderstandsdauer nach DIN 4102 von mindestens 30 min.

**Claims**

1. Use of a glass body having

- a coefficient of thermal expansion $\alpha_{20/300}$ of between 3 and $6 \times 10^6$ K$^{-1}$,
- a specific thermal strain $\varphi$ of between 0.3 and 0.5 N/(mm$^2 \times$ K),
- a glass transition temperature Tg of between 535 and 850°C,
- a product of the specific thermal strain $\varphi$ times (Tg - 20°C) of between 180 and 360 N/mm$^2$,
- a temperature at viscosity $10^{13}$ dPas (annealing point) of above 560°C,
- a temperature at viscosity $10^{7.6}$ dPas (softening point) of above 830°C,
- and a temperature at viscosity $10^4$ dPas (working point) of below 1300°C,

for producing a tempered glass body which is suitable as fire-protection safety glass and which, in the tempered state, has high resistance to thermally or mechanically induced stresses and has safety glass properties in accordance with DIN 1249 or BS 6206 (forms granules on fracture), in particular a glass pane for fire-protection glazing, in a conventional air tempering unit having a heat transfer coefficient of between 200 and 550 Wm$^{-2}$K$^{-1}$ at an airstream pressure of from 1 to 19 kPas.

2. Use of a glass body according to Claim 1 having a composition (in % by weight based on oxide) of:

| | | | |
|---|---|---|---|
| SiO$_2$ | 73 | - | 78 |
| B$_2$O$_3$ | 9 | - | 12 |
| Al$_2$O$_3$ | 1.5 | - | 4 |
| Li$_2$O | 0 | - | 4 |
| Na$_2$O | 1 | - | 5 |
| K$_2$O | 1 | - | 5 |
| MgO | 0 | - | 3 |
| CaO | 1 | - | 3 |
| SrO + BaO | 0 | - | 2 |
| ZnO | 1 | - | 2 |
| ZrO$_2$ | 0.5 | - | 3 |
| $\Sigma$ alkali metal oxides | 5 | - | 7 |
| $\Sigma$ MgO+CaO+SrO+BaO+ZnO+ZrO$_2$ | 6 | - | 10 |

and optionally containing, as refining agents, NaCl, Sb$_2$O$_3$, As$_2$O$_3$ and CeO$_2$ in conventional amounts.

3. Use of a glass body according to Claim 1 having a composition (in % by weight, based on oxide) of:

| | | | |
|---|---|---|---|
| SiO$_2$ | 57 | - | 64 |
| B$_2$O$_3$ | 0 | - | 6 |
| Al$_2$O$_3$ | 12 | - | 17 |
| MgO | 0 | - | 6 |
| CaO | 5 | - | 19 |
| SrO + BaO | 0 | - | 6.5 |
| ZnO | 0 | - | 7 |
| ZrO$_2$ | 1 | - | 5.5 |
| CeO$_2$ | 0 | - | 8 |

(fortgesetzt)

| TiO$_2$ | 0 | - | 4.5 |
|---|---|---|---|
| Σ MgO+CaO+SrO+BaO+ZnO+ZrO$_2$+CeO$_2$+TiO$_2$ | 16 | - | 26 |

and optionally containing, as refining agents, NaCl, Sb$_2$O$_3$ and As$_2$O$_3$ in conventional amounts.

4.  Use of a glass body according to at least one of Claims 1 to 3 for producing a tempered glass body having a compressive strain of 80 - 120 N/mm$^2$.

5.  Use of a glass body according to at least one of Claims 1 to 4 for producing a glass pane having a compressive strain of 80 - 120 N/mm$^2$ and a fire resistance time, in accordance with DIN 4102, of at least 30 min.

**Revendications**

1.  Utilisation d'un corps en verre ayant

    -   un coefficient de dilatation thermique $\alpha_{20/300}$ compris entre 3 et 6 x 10$^{-6}$ K$^{-1}$,
    -   une tension thermique spécifique $\phi$ comprise entre 0,3 et 0,5 N/(mm$^2$ x K),
    -   une température de transition vitreuse Tg comprise entre 535 et 850°C,
    -   un produit de la tension thermique $\phi$ par (Tg-20°C) compris entre 180 et 360 N/mm$^2$,
    -   une température pour la viscosité de 10$^{13}$ dPas (point de refroidissement supérieur) supérieure à 560°C,
    -   une température pour la viscosité de 10$^{7,6}$ dPas (point de ramollissement) supérieure à 830°C,
    -   et une température pour la viscosité de 10$^4$ dPas (point de mise en oeuvre) supérieure à 1300°C,

    en vue de la production d'un corps en verre précontraint approprié en tant que verre de sécurité coupe-feu, qui possède à l'état précontraint une capacité de charge élevée contre des tensions induites de manière thermique ou mécanique ainsi que des propriétés de verre de sécurité conformément à la norme DIN 1249 ou BS 6206 (rupture grumeleuse), en particulier d'une vitre en verre pour des vitrages coupe-feu, sur une installation de précontrainte à l'air classique, ayant des coefficients de transfert de chaleur compris entre 200 et 550 Wm$^{-2}$K$^{-1}$ pour des pressions de soufflage de 1 à 19 kPas.

2.  Utilisation d'un corps en verre selon la revendication 1, ayant une composition (en % en poids sur la bases des oxydes) de:

| SiO$_2$ | 73 | - | 78 |
|---|---|---|---|
| B$_2$O$_3$ | 9 | - | 12 |
| Al$_2$O$_3$ | 1,5 | - | 4 |
| Li$_2$O | 0 | - | 4 |
| Na$_2$O | 1 | - | 5 |
| K$_2$O | 1 | - | 5 |
| MgO | 0 | - | 3 |
| CaO | 1 | - | 3 |
| SrO + BaO | 0 | - | 2 |
| ZnO | 1 | - | 2 |
| ZrO$_2$ | 0,5 | - | 3 |
| Σ oxydes alcalins | 5 | - | 7 |
| Σ MgO+CaO+SrO+BaO+ZnO+ZrO$_2$ | 6 | - | 10 |

et, le cas échéant, en tant qu'agent d'affinage NaCl, Sb$_2$O$_3$, As$_2$O$_3$ et CeO$_2$, dans les quantités usuelles.

3. Utilisation d'un corps en verre selon la revendication 1, ayant une composition (en % en poids sur la base des oxydes) de:

| | | | |
|---|---|---|---|
| $SiO_2$ | 57 | - | 64 |
| $B_2O_3$ | 0 | - | 6 |
| $Al_2O_3$ | 12 | - | 17 |
| MgO | 0 | - | 6 |
| CaO | 5 | - | 19 |
| SrO + BaO | 0 | - | 6,5 |
| ZnO | 0 | - | 7 |
| $ZrO_2$ | 1 | - | 5,5 |
| $CeO_2$ | 0 | - | 8 |
| $TiO_2$ | 0 | - | 4,5 |
| $\Sigma$ MgO+CaO+SrO+BaO+ZnO+ZrO$_2$+CeO$_2$+TiO$_2$ | 16 | - | 26 |

et, le cas échéant, en tant qu'agent d'affinage NaCl, $Sb_2O_3$, et $As_2O_3$, dans les quantités usuelles.

4. Utilisation d'un corps en verre selon au moins l'une quelconque des revendications 1 à 3, en vue de la production d'un corps en verre précontraint ayant une précontrainte en pression de 80 - 120 N/mm$^2$.

5. Utilisation d'un corps en verre selon l'une quelconque des revendications 1 à 4 en vue de la production d'un corps en verre ayant une précontrainte en pression de 80 - 120 N/mm$^2$ et une durée de résistance au feu, conformément à la norme DIN 4102, d'au moins 30 minutes.